# EUROPEAN PATENT SPECIFICATION

(11) **EP 4 210 273 B1**
(45) Date of publication and mention of the grant of the patent: **01.10.2025**
(21) Application number: 21864618.0
(22) Date of filing: 31.08.2021
(51) Int. Cl.: H04L 9/32, H04L 9/08, H04L 9/40, H04W 12/02, H04W 12/041, H04W 12/069, H04W 12/108, G06F 21/32, G06F 21/33

(54) **USER TERMINAL AND AUTHENTICATION EXECUTION DEVICE FOR PERFORMING PSEUDONYM 2-FACTOR AUTHENTICATION, AND OPERATING METHOD THEREFOR**
BENUTZERENDGERÄT UND AUTHENTIFIZIERUNGSAUSFÜHRUNGSVORRICHTUNG ZUR DURCHFÜHRUNG EINER PSEUDONYM-2-FAKTOR-AUTHENTIFIZIERUNG UND BETRIEBSVERFAHREN DAFÜR
TERMINAL D'UTILISATEUR ET DISPOSITIF D'EXÉCUTION D'AUTHENTIFICATION PERMETTANT D'EFFECTUER UNE AUTHENTIFICATION DE FACTEUR 2 DE PSEUDONYME, ET SON PROCÉDÉ DE FONCTIONNEMENT ASSOCIÉ

(30) Priority: 02.09.2020 KR 20200111902; 30.08.2021 KR 20210114965
(43) Date of publication of application: 12.07.2023
(73) Proprietor: ICTK Holdings Co., Ltd., Seongnam-si, Gyeonggi-do 13488 (KR)
(72) Inventor: KIM, Dong Hyun, Yongin-si Gyeonggi-do 16938 (KR); SHIN, Kwang Cho, Seoul 02443 (KR); LEE, Jae Seong, Seoul 05240 (KR)
(74) Representative: Fuchs Patentanwälte Partnerschaft mbB
(86) International application number: PCT/KR2021/011684
(87) International publication number: WO 2022/050658

(56) References cited:
- EP-A1- 3 461 100
- JP-A- 2014 523 192
- KR-A- 20200 096 164
- KR-B1- 101 947 408
- US-A1- 2012 033 807
- US-A1- 2019 108 328
- US-A1- 2020 076 604
- US-A1- 2020 092 116

## Description

### [Technical Field]

The present invention relates to a user terminal and authentication execution device for performing pseudonym 2-factor authentication, and an operating method therefor, and more particularly, to an inborn ID-based pseudonym 2-factor authentication technique in which bioinformation of a user and a unique key (e.g., physically unclonable function (PUF)) of a device are combined.

### [Background Art]

As the information society becomes advanced, the need for personal privacy protection is also increasing, and the safety of the authentication means is emerging as an important technical issue. In particular, a high reliability level of the authentication means is required for user authentication in access to electronic finance, devices, or systems, authentication in Internet of Things (IoT) or machine to machine (M2M), or the like. Authentication includes knowledge-based authentication, possession-based authentication, authentication using a user's own biometric information, and the like. Authentication is divided into 1-factor authentication, 2-factor authentication, and multi-factor authentication depending on whether authentication is performed with only one means or with a plurality of means.

### Multi-factor Authentication

The information technology (IT) infrastructure is diversifying from devices in the form of server-clients connected through wired networks into various types of devices such as wearable devices and vehicles connected through various types of wireless networks such as mobile networks, radio frequency identification (RFID), or near field communication (NFC). Further, as the application fields from payment to M2M become advanced, the existing password-based authentication has become less secure or difficult to apply. Accordingly, the need for authentication methods that are more secure and applicable in various forms is being highlighted.

Multi-factor authentication is an authentication method in which two or more knowledge-based, possession-based, and bio-based authentication methods are combined and used. The knowledge-based authentication is a traditional authentication method such as passwords that confirm pre-shared memories or promised confidential information. The possession-based authentication is an authentication method that checks whether a user has a tangible or intangible authentication means such as a security card, a one-time password (OTP), a certificate, or the like. The bio-based authentication is a method of identifying and authenticating characteristics of a user's unique body structure. Each authentication method has inherent strengths and weaknesses in terms of safety and usability, and safety may be increased using two or more types of authentication methods simultaneously. The use of a combination of password and OTP, smart key and fingerprint, or the like may be one of several examples of multi-factor authentication.

However, as the authentication method changes from 1-factor authentication to 2-factor authentication or multi-factor authentication, authentication procedures for security increase, causing user inconvenience. The processing time for step-by-step authentication increases, and additional costs are incurred due to securing storage space caused by an increase in authentication data.

### Anonymous Authentication

As the IT infrastructure is expanding throughout life, excessive collection and exposure of personal information is becoming a major issue. Personal privacy is violated by requesting excessive personal information, and personal information leakage accidents frequently occur due to negligence in information management. Even when important personal information is safely stored by a third party, there are limitations in the current Internet system that uses real names. As a way to protect personal information, there is an anonymous authentication technology.

Anonymous authentication is based on certificates that secure anonymity. Anonymous authentication is associated with the concept of anonymous payments or untraceability. As representative techniques of anonymous authentication, there are a blind signature, a group signature, and the like.

In a blind signature protocol, a signer does not know about a message he/she signs, and a recipient receiving a signature does not know that he or she has obtained the message. Generally, a blinded message is obtained by combining a random blinding factor and a message in various ways. The blinded message is transmitted to a signer, and the signer only needs to sign it using a normal signature algorithm. A resulting message affected by a blinding factor may be verified later using a public key of the signer. Since the content of the message is unknown, this method is used in online voting and the like.

A group signature is a signature method that allows one member of a group to anonymously sign a message. For example, when an employee of a large company signs a document using a group signature structure, a verifier that verifies the validity of the signature can only know that it was signed by one of the company's employees, not exactly which of the employees signed it. As another application example, for applications that use key cards to access restricted areas, although the movement of individual employees in these areas cannot be tracked, it is possible to ensure only employees belonging to that group have access to the areas. The most important factor in the group signature structure may be a group manager. The group manager may have the ability to add new members to the group and, in the event of a dispute, to disclose who signed it.

Since it is not possible to know the content of the signature or who signed it, it is not known who the certificate is for, and thus anonymity may be secured. However, as compared to general signatures, a third party is required or a length of the signature is very long, which is cumbersome to use in practice, and increases in cost for processing time and additional storage data space may reduce practicality.

US 2012/033807 A1 relates to a method of, and system for, authenticating a device and a user. A key is derived from the user and from information from the device. The key is used to encode sensing data from the device, and the encoded data is transmitted to a remote server.

EP 3 461 100 A1 relates to a authenticating a networked camera using a certificate having device binding information.

KR 10-2020-0096164 relates to an apparatus for processing authentication information. A process of generating an authentication key from a seed key including a part of bio-information and a part of the unique key is disclosed. The seed key is a key that is a basis for generating the authentication key for performing authentication, and has a predetermined number of bits.

It is therefore the object of the present invention to provide an improved operating method of an authentication execution device, an improved operating method of a user terminal, an improved authentication execution device, and an improved user terminal.

This object is solved by the subject-matter of the independent claims.

Preferred embodiments are defined by the dependent claims.

One aspect of the present invention provides an operating method of an authentication execution device, including receiving a first inborn ID, private key signature information, and a certificate issued by an authentication system from a user terminal, obtaining a second inborn ID and a public key of the user terminal included in the certificate by decrypting the certificate using a public key of the authentication system, performing primary authentication of a user of the user terminal by checking whether the first inborn ID and the second inborn ID match each other, and when the primary authentication is completed, performing secondary authentication of the user by verifying private key signature information with the public key.

The first inborn ID may be generated based on a first part of an authentication key generated using at least one of at least some of bioinformation of the user obtained from the user terminal, at least some of a unique key corresponding to the user terminal, and at least some of random number information stored in the user terminal.

The authentication key may be generated using at least one of the at least some of the unique key corresponding to the user terminal, and the at least some of the random number information stored in the user terminal in response to a case in which the bioinformation of the user obtained from the user terminal matches pre-stored bioinformation.

A private key and a public key of the user terminal may be generated based on a second part of the authentication key.

The first part and the second part of the authentication key may be determined independently of each other.

The certificate may be generated by signing the second inborn ID and the public key, which are transmitted from the user terminal to the authentication system in a setup process, with a private key of the authentication system.

The second inborn ID and the public key, which are transmitted from the user terminal to the authentication system in a setup process, along with personal information of the user may be registered in the authentication system.

The operating method of the authentication execution device may further include, when the secondary authentication is completed, performing an operation according to a request received from the user terminal.

Another aspect of the present invention provides an operating method of a user terminal, including generating a first inborn ID in response to a user's request for an authentication execution device, transmitting the first inborn ID, private key signature information of the user terminal, and a certificate issued by an authentication system to the authentication execution device, and receiving results of primary authentication and secondary authentication that are performed by the authentication execution device on the basis of at least one of the first inborn ID, the private key signature information, and the certificate, wherein the first inborn ID is generated based on a first part of an authentication key generated using at least one of at least some of bioinformation of the user obtained from the user terminal, at least some of a unique key corresponding to the user terminal, and at least some of random number information stored in the user terminal.

The authentication key may be generated using at least one of the at least some of the unique key corresponding to the user terminal, and the at least some of the random number information stored in the user terminal in response to a case in which the bioinformation of the user obtained from the user terminal matches pre-stored bioinformation.

A private key and a public key of the user terminal may be generated based on a second part of the authentication key.

The first part and the second part of the authentication key may be determined independently of each other.

The certificate may be generated by signing the second inborn ID and the public key, which are transmitted from the user terminal to the authentication system in a setup process, with a private key of the authentication system.

The second inborn ID and the public key, which are transmitted from the user terminal to the authentication system in a setup process, along with personal information of the user may be registered in the authentication system.

In the receiving of the results of the primary authentication and the secondary authentication, a result of an operation that is performed according to the request may be received in response to completion of the primary authentication and the secondary authentication.

Still another aspect of the present invention provides an authentication execution device including a processor and a memory including at least one instruction executable by the processor, wherein, when the at least one instruction is executed by the processor, the processor receives a first inborn ID, private key signature information, and a certificate issued by an authentication system from a user terminal, obtains a second inborn ID and a public key of the user terminal included in the certificate by decrypting the certificate using a public key of the authentication system, performs primary authentication of a user of the user terminal by checking whether the first inborn ID and the second inborn ID match each other, and when the primary authentication is completed, performs secondary authentication of the user by verifying private key signature information with the public key.

Yet another aspect of the present invention provides a user terminal including a processor and a memory including at least one instruction executable by the processor, wherein when the at least one instruction is executed in the processor, the processor generates a first inborn ID in response to a user's request for an authentication execution device, transmits the first inborn ID, private key signature information of the user terminal, and a certificate issued by an authentication system to the authentication execution device, and receives results of primary authentication and secondary authentication that are performed by the authentication execution device on the basis of at least one of the first inborn ID, the private key signature information, and the certificate, and the first inborn ID is generated based on a first part of an authentication key generated using at least one of at least some of bioinformation of the user obtained from the user terminal, at least some of a unique key corresponding to the user terminal, and at least some of random number information stored in the user terminal.

### [Advantageous Effects]

According to an embodiment of the present invention, by utilizing an inborn ID that is a combination of a device-specific physically unclonable function (PUF) and bioinformation, multi-factor authentication procedures can be simplified and anonymity can be secured.

According to an embodiment of the present invention, by performing authentication using unique information that is a combination of bioinformation (authentication based on bioinformation) and a PUF (authentication based on proprietary information) as an authentication key, multi-factor authentication procedures can be simplified.

According to an embodiment of the present invention, in a setup process, unique information that is a combination of bioinformation and a PUF can be used as an inborn ID, and a separate authentication system can match personal information corresponding to the ID and issue a certificate for securing the inborn ID, and in an authentication step, a target to be authenticated can be authenticated with the inborn ID, and thus securing anonymity without invasion of personal privacy can be achieved.

According to an embodiment of the present invention, when bio authentication is an existing system, the bio authentication can be used for two-way authentication and personal information protection by generating an inborn ID by matching on a device.

### [Description of Drawings]

FIGS. 1 and 2 are diagrams for describing an operation of generating an inborn ID and key in a user terminal according to an embodiment.
FIGS. 3 and 4 are diagrams for describing a registration operation and a certificate issuance operation in an authentication system according to an embodiment.
FIG. 5 is a diagram for describing an authentication operation according to an embodiment.
FIG. 6 is a flowchart for describing a setup process according to an embodiment.
FIG. 7 is a flowchart for describing an authentication process according to an embodiment.
FIG. 8 is a block diagram for describing an electronic device according to an embodiment.

### [Modes of the Invention]

Hereinafter, embodiments will be described in detail with reference to the accompanying drawings. However, while the embodiments may be modified in various ways and take on various alternative forms, the scope of the patent application is not limited by these embodiments. It should be understood that all modifications, equivalents, and alternatives to the embodiments are included within the scope of the present invention.

The terminology used herein is for the purpose of describing particular embodiments only and is not intended to be limiting to the present invention. As used herein, the singular forms "a" and "an" are intended to also include the plural forms, unless the context clearly indicates otherwise. It should be further understood that the terms "comprise," "comprising," "include," and/or "including," when used herein, specify the presence of stated features, integers, steps, operations, elements, parts, or combinations thereof, but do not preclude the presence or addition of one or more other features, integers, steps, operations, elements, parts, or combinations thereof.

Unless otherwise defined, all terms including technical and scientific terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Further, in the description with reference to the accompanying drawings, the same or corresponding elements are denoted by the same reference numerals regardless of reference numbers, and thus the description thereof will not be repeated. Further, in descriptions of the present invention, when detailed descriptions of related well-known technology are deemed to unnecessarily obscure the gist of the present invention, they will be omitted.

Further, in describing elements of the present invention, terms such as first, second, A, B, (a), and (b) may be used. These terms are only used to distinguish one element from another element, but the nature or order of the corresponding elements is not limited by these terms. It will be understood that when an element is referred to as being "connected" or "coupled" to another element, it can be directly connected or coupled to another element, or it can be connected or coupled to another element through still another element, which is an intervening element.

Elements included in one embodiment and elements including common functions will be described using the same names in other embodiments. Unless stated to the contrary, descriptions described in one embodiment may be applied to other embodiments, and overlapping detailed descriptions will be omitted.

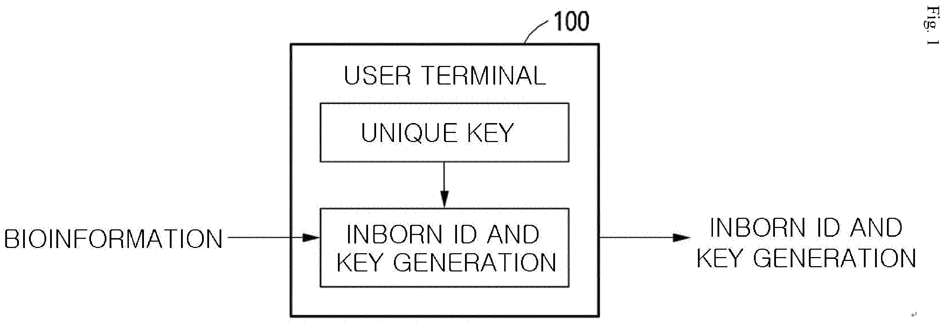

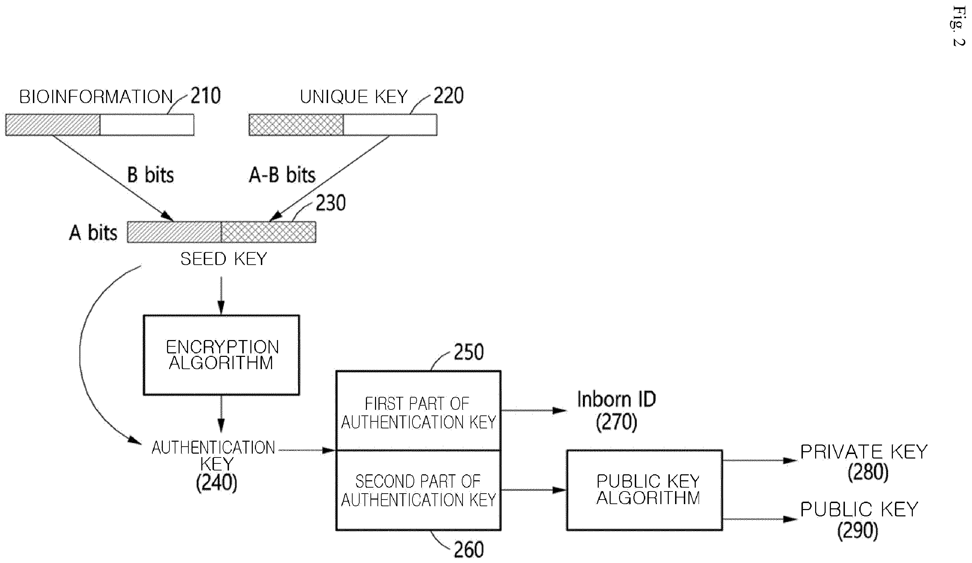

FIGS. 1 and 2 are diagrams for describing an operation of generating an inborn ID and key in a user terminal according to an embodiment.

Referring to FIG. 1, a user terminal 100 may generate an inborn ID and a key on the basis of bioinformation of a user and a unique key in the user terminal 100. The bioinformation may be input by the user, and the unique key may be a value inherent in the user terminal 100.

The user terminal 100 is a device controlled by the user, and may include, for example, any of various computing devices such as mobile phones, smartphones, tablet computers, laptop computers, personal computers, and e-book devices, any of various wearable devices such as smart watches, smart glasses, head-mounted displays (HMDs), and smart clothing, any of various home appliances such as smart speakers, smart televisions (TVs), and smart refrigerators, a smart car, a smart kiosk, an Internet of Things (IoT) device, a walking assist device (WAD), a drone, or a robot. The user terminal 100 may be a device to be authenticated by an authentication execution device which will be described below.

The bioinformation is biometric data of the user, and may include, for example, information on at least one of the user's fingerprint, iris, voice, face, vein distribution, and retina. However, the bioinformation is not limited to the above-described examples, and may include biometric data of various users.

The unique key is a physically unclonable function (PUF) value based on randomly determined electrical characteristics that cannot be physically replicated, using differences in the microstructure of semiconductors that occur in the same manufacturing process, contains unique information of a corresponding device, such as a type of fingerprint, and may have time-invariant properties. A PUF may provide an unpredictable digital value. Even when individual PUFs are accurate and manufactured in the same manufacturing process, digital values provided by individual PUFs are different from each other due to process variations. Therefore, the PUF may also be referred to as a physical one-way function (POWF) that is practically impossible to be duplicated. Such a PUF may be used to generate an authentication key for security and/or device authentication. For example, the PUF may be used to provide a unique key to distinguish one device from another device. In Korean Patent Registration No. 10-1139630, a PUF and a method for implementing the same are described, and the entire contents thereof are incorporated herein by reference.

In order to describe the generation of the inborn ID and the key with reference to FIG. 2, a seed key 230 including at least some of bioinformation 210 and at least some of a unique key 220 may be determined. The seed key 230 is a key that is a basis for generating an authentication key 240 for performing authentication, and may have bits of a predetermined number. For convenience of description, the seed key 230 is assumed to have A bits in this specification. The seed key 230 may be generated to include at least some of the bioinformation 210 and at least some of the unique key 220.

It is well known that the bioinformation 210 is not a digital value from the beginning but is output as a digital value from a biosensor that detects the user's biological characteristics in an analog domain so that there is a weakness in terms of time-invariance. For example, in the case of voice-based bio authentication, even when some pieces of the bioinformation 210 are the same each time it is recognized by several factors such as the condition of the user's neck, ambient noise, or the like, there may be a part that is determined differently each time. Further, even in the case of a fingerprint, some pieces of the bioinformation 210 may be determined differently every time depending on various factors such as the position/direction of contacting the finger to the sensor, the degree of contact, the surface condition of the sensor, the degree of wetness of the finger, temperature, humidity, and the like, and even in the case of a face or an iris, there may be some pieces of the bioinformation 210 that are output differently every time depending on illumination or other distortion factors. Due to the above facts, the bioinformation 210 may be misrecognized. Therefore, at least some of the bioinformation 210 whose constancy is secured to a certain level or higher may be selected and utilized. The selection operation may be understood as a difference in the level at which the sensor samples the user's biological characteristics, or may be understood as post-processing after sensing the user's bioinformation 210.

The degree to which constancy is secured in the bioinformation 210, and at least some of the bioinformation 210 whose constancy is secured may be determined based on at least one of the type of the bioinformation 210, the characteristics of the user, an environment in which the bioinformation 210 is detected, and the characteristics of the sensor that detects the bioinformation 210. The type of the bioinformation 210 includes a fingerprint, iris, voice, face, vein distribution, retina, etc., and the degree to which constancy is secured (e.g., number of bits, bit length, etc.) may vary depending on the characteristics of the corresponding type. The characteristics of the user include the user's race, age, body characteristics, and the like, and, for example, a fingerprint of a user with hyperhidrosis may have a smaller degree of secured consistency than a fingerprint of a user with dry hands. Further, the environment in which the bioinformation 210 is detected may include, for example, various environmental parameters such as illumination, temperature, humidity, and ambient noise without limitation. Further, the characteristics of the sensor that detects the bioinformation 210 may include a sensing resolution, sensing sensitivity, a sensing method, and the like. For example, in the case of an optical fingerprint sensor and an ultrasonic fingerprint sensor, the degrees to which constancy is secured may be different from each other.

In the example of FIG. 2, it is assumed that at least some of the bioinformation 210 whose constancy is secured has B bits. Here, B may be a natural number smaller than A. In other words, it is difficult to generate the seed key 230 of A bits only with at least some of the bioinformation 210 whose constancy is secured, and the insufficient A-B bits may be extracted from the unique key 220. The unique key 220 is a PUF value based on electrical characteristics that are randomly determined on the basis of process variations in the manufacturing process, and has time-invariant properties.

First, the seed key 230 may be composed of at least some of the bioinformation 210 whose constancy is secured, and the rest may be composed of at least one bit of the unique key 220. As the seed key 230 is generated based on both the bioinformation 210 and the unique key 220 in this way, security and convenience may be improved due to single processing of user authentication based on the bioinformation 210 and device authentication based on the unique key 220, as well as the issue of constancy of the bioinformation 210 itself may be remedied. Preferably, half of the seed key 230 is composed of at least some of the bioinformation 210 and the other half is composed of at least some of the unique key 220, and thus either user authentication or device authentication may be performed equally without negligence, but at least some of the bioinformation 210 and at least some of the unique key 220 constituting the seed key 230 are not limited to the above examples.

In an embodiment, the seed key 230 may be determined additionally using at least some of random number information stored in the user terminal. The random number information may be a value which is generated by a random number generator (RNG) and stored in a memory such as a non-volatile memory (NVM) or the like. In summary, the seed key 230 may be generated using at least one of at least some of the bioinformation 210 of the user obtained from the user terminal, at least some of the unique key 220 corresponding to the user terminal, and at least some of the random number information stored in the user terminal.

The authentication key 240 is determined based on the seed key 230. In some embodiments, the seed key 230 may be directly used as the authentication key 240, or the authentication key 240 may be generated from the seed key 230 using an encryption algorithm.

According to another embodiment, the bioinformation 210 obtained from the user terminal may not be used to determine the seed key 230. The user terminal may determine whether the obtained bioinformation 210 matches pre-stored bioinformation, and when it is determined that the bioinformation 210 matches the pre-stored bioinformation, generate the seed key 230 using at least one of at least some of the unique key 220 and at least some of the random number information, and generate the authentication key 240 on the basis of the seed key 230.

The user terminal may generate an inborn ID 270 on the basis of a first part 250 of the authentication key 240. For example, the user terminal may directly use the first part 250 of the authentication key 240 as the inborn ID 270. The user terminal may generate a private key 280 and a public key 290 by applying a public key algorithm to a second part 260 of the authentication key 240.

A part corresponding to the length required for the inborn ID 270 may be extracted from the authentication key 240 as the first part 250. A part corresponding to the length required for generating the private key 280 and the public key 290 may be extracted from the authentication key 240 as the second part 260. The first part 250 and the second part 260 may be parts that do not overlap each other, and according to an embodiment, a part that does not belong to either of the first and second parts 250 and 260 may be present in the authentication key 240. Further, according to another embodiment, the first part 250 and the second part 260 may at least partially overlap.

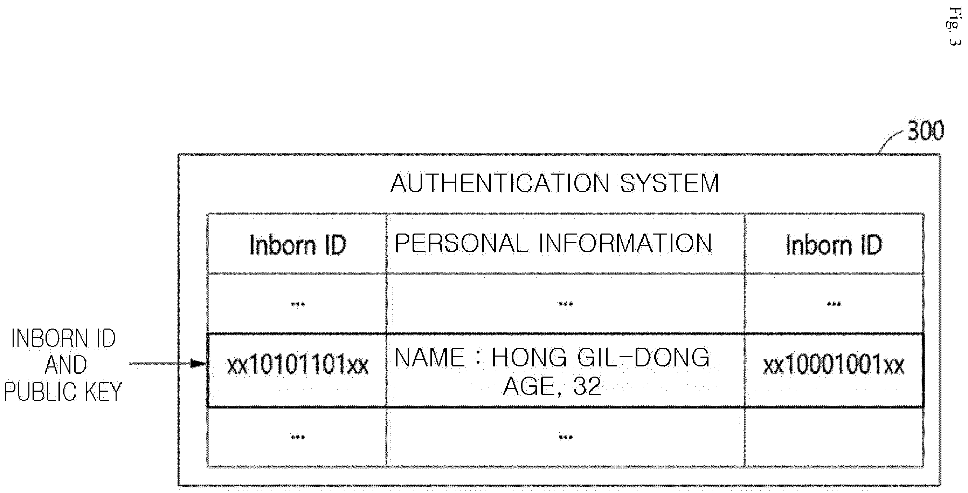

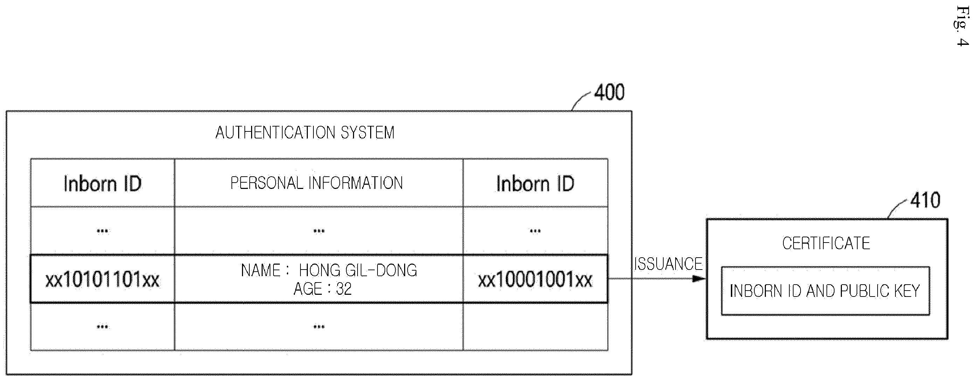

FIGS. 3 and 4 are diagrams for describing a registration operation and a certificate issuance operation in an authentication system according to an embodiment.

Referring to FIG. 3, an example for describing a registration operation of an authentication system 300 is illustrated. In a setup process, an inborn ID transmitted from a user terminal and a public key of the user terminal may be registered in the authentication system 300. The authentication system 300 may match and register the received inborn ID and the public key of the user terminal with personal information of a user. The personal information of the user may include one or more of various pieces of personal information on the corresponding user, such as name, age, address, ID information registered in the authentication system 300, and the like.

Referring to FIG. 4, an example for describing a certificate issuance operation of an authentication system 400 is illustrated. An example for describing the certificate issuance operation of the authentication system 400 is illustrated. In a setup process, the authentication system 400 may issue a certificate 410 for verifying a user's signature. The certificate 410 may be generated by encrypting an inborn ID of the user and a public key with a private key of the authentication system 400. The issued certificate 410 may be transmitted to a user terminal of the corresponding user.

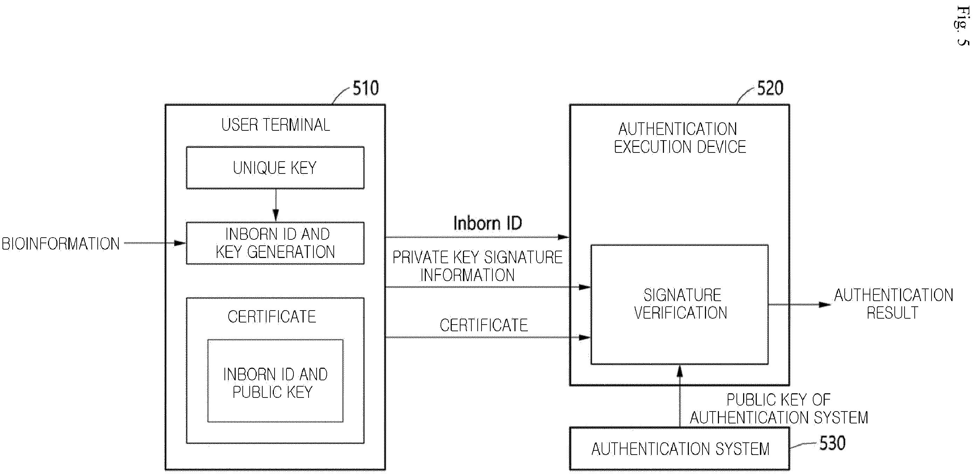

FIG. 5 is a diagram for describing an authentication operation according to an embodiment.

Referring to FIG. 5, a process in which actual user authentication is performed after a setup process is illustrated.

A user terminal 510 may determine a seed key using at least some of bioinformation obtained from a user and at least some of a unique key, and generate an authentication key on the basis of the seed key. The user terminal 510 may generate an inborn ID on the basis of a first part of the authentication key, and generate a public key and a private key on the basis of a second part of the authentication key. In another embodiment, the user terminal 510 may determine a seed key using at least one of at least some of bioinformation, at least some of a unique key, and at least some of stored random number information, and generate an authentication key on the basis of the seed key.

The user terminal 510 may generate private key signature information using the private key. For example, the private key signature information may be a document signed with the private key.

The user terminal 510 may transmit the inborn ID, the private key signature information, and a certificate issued from an authentication system 530 to an authentication execution device 520.

The authentication execution device 520 may decrypt the certificate received from the user terminal 510 using a public key of the authentication system 530 received from the authentication system 530 to obtain the inborn ID and the public key of the user terminal 510 which are registered in the authentication system 530 and included in the certificate. In this specification, for convenience of description, the inborn ID which is generated by the user terminal 510 during the authentication operation is referred to as a first inborn ID, and the inborn ID which is registered in the authentication system 530 and included in the certificate is referred to as a second inborn ID.

The authentication execution device 520 may perform primary authentication of the user by checking whether the first inborn ID received from the user terminal 510 and the second inborn ID obtained from the certificate match each other. When the first inborn ID and the second inborn ID do not match each other, the authentication execution device 520 may transmit a message indicating that the primary authentication fails to the user terminal 510. Conversely, when the first inborn ID and the second inborn ID match each other, the authentication execution device 520 may subsequently perform secondary authentication.

The authentication execution device 520 may perform the secondary authentication of the user by verifying the private key signature information received from the user terminal 510 with the public key obtained through the certificate decryption. When the private key signature information is not normally decrypted with the corresponding public key, the authentication execution device 520 may transmit a message indicating that the secondary authentication fails to the user terminal 510. Conversely, when the private key signature information is normally decrypted with the corresponding public key, the authentication execution device 520 may normally complete the secondary authentication.

When the two-stage authentication procedure is passed, bio and possession (e.g., PUF)-based 2-factor authentication may be completed using a pseudonym inborn ID. In other words, since the authentication procedure is completed using unique information that is a combination of bio-based authentication information and possession-based authentication information, 2-factor authentication is performed at the same time, and, in this case, since the matching personal information is a pseudonym inborn ID, pseudonym authentication may be satisfied.

In an embodiment, even when the 2-factor authentication of user authentication using bioinformation and device authentication using device information is performed, application services with high convenience may be provided. For example, safe and convenient authentication in which constancy is secured may be performed in various fields requiring authentication, such as payment through voice recognition in a vehicle, electronic payment through IoT devices, financial transactions using smartphones, and the like.

For example, In FIG. 3, when the authentication execution device 520 is implemented as a vehicle and the authentication procedure described above is completed through communication with the user terminal 510 (e.g., smartphone) possessed by a legitimate user, an operation of opening a door of the vehicle may be performed. Alternatively, when the authentication execution device 520 is implemented as a payment server and the authentication procedure described above is completed through communication with the user terminal 510 (e.g., smartphone) possessed by a legitimate user, a payment requested by the corresponding user terminal 510 may be approved by the payment server. **In** this case, the authentication system 530 corresponds to a certification authority (CA), and may include, for example, a public certification authority server. **In** addition, since the authentication procedure described above is applied without limitation to various applications, the pseudonym 2-factor authentication may be performed safely and conveniently.

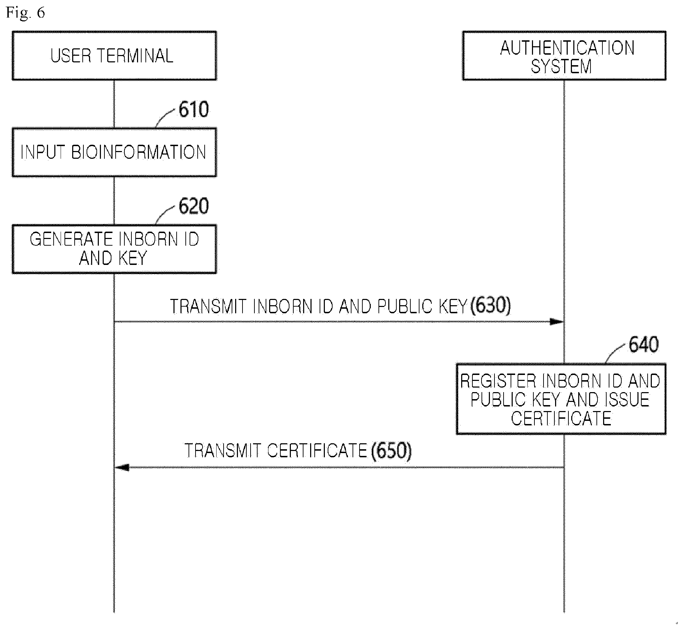

FIG. 6 is a flowchart for describing a setup process according to an embodiment.

**In** operation 610, a user terminal may receive bioinformation of a user. The bioinformation may include, for example, information on at least one of the user's fingerprint, iris, voice, face, vein distribution, and retina. However, the bioinformation is not limited to the above-described examples, and may include biometric data of various users.

**In** operation 620, the user terminal may generate an inborn ID, a private key, and a public key using an authentication key that is generated using at least one of at least some of the bioinformation, at least some of a unique key corresponding to the user terminal, and at least some of random number information stored in the user terminal. For example, the user terminal may generate an inborn ID using a first part of the authentication key and generate a private key and a public key using a second part of the authentication key. **In** another example, the user terminal may determine whether the obtained bioinformation of the user matches the pre-stored bioinformation, and generate an authentication key using at least one of at least some of the unique key and at least some of the random number information in response to the case in which the obtained bioinformation of the user matches the pre-stored bioinformation.

In operation 630, the user terminal may transmit the inborn ID and the public key to an authentication system.

In operation 640, the authentication system may match and register the inborn ID and the public key received from the user terminal with personal information of the user. Further, the authentication system may issue a certificate by signing the inborn ID and the public key with a private key of the authentication system.

In operation 650, the authentication system may transmit the issued certificate to the user terminal.

Since the above details described with reference to FIGS. 1 to 5 are directly applied to each operation illustrated in FIG. 6, detailed descriptions thereof will be omitted.

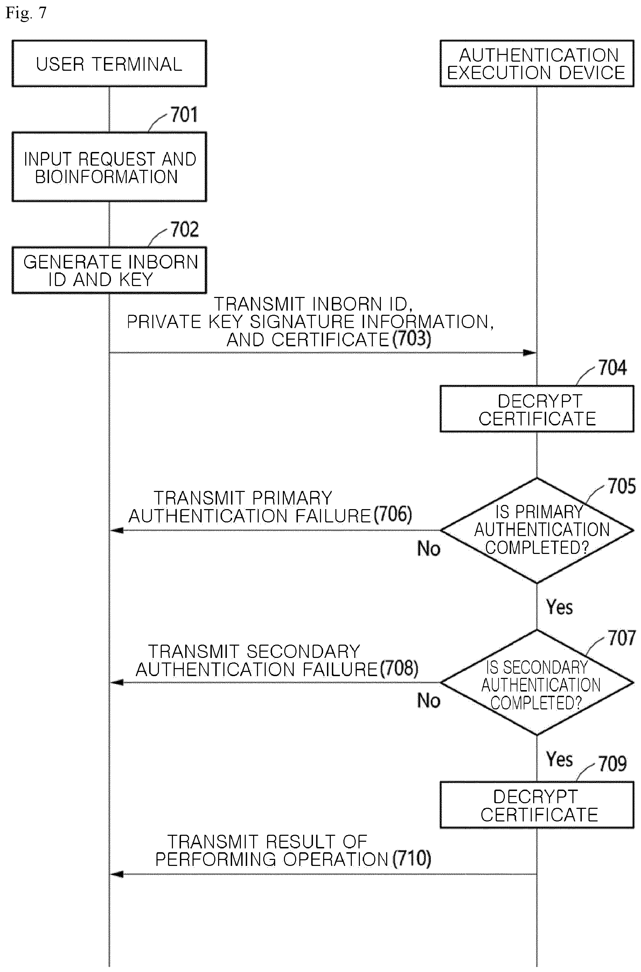

FIG. 7 is a flowchart for describing an authentication process according to an embodiment.

In operation 701, a user terminal may receive a user's request for an authentication execution device. For example, the request may include making a payment, opening or closing a door, unlocking an electronic device, securing access, and the like. The user terminal may receive bioinformation of the user together with the user's request.

In operation 702, the user terminal may generate a first inborn ID, a private key, and a public key using an authentication key generated using at least one of at least some of the bioinformation, at least some of a unique key corresponding to the user terminal, and at least some of random number information stored in the user terminal. In another example, the user terminal may determine whether the obtained bioinformation of the user matches the pre-stored bioinformation, and may generate an authentication key using at least one of at least some of the unique key and at least some of the random number information in response to the case in which the obtained bioinformation of the user matches the pre-stored bioinformation.

In operation 703, the user terminal may transmit the first inborn ID, private key signature information, and a certificate to the authentication execution device. For example, the private key signature information may include a document signed with the private key. The certificate may be issued by an authentication system in a setup process.

In operation 704, the authentication execution device may decrypt the certificate received from the user terminal with a public key of the authentication system to obtain a second inborn ID and the public key of the user terminal included in the certificate. The authentication execution device may receive the public key of the authentication system from the authentication system.

In operation 705, the authentication execution device may perform primary authentication of the user by checking whether the first inborn ID received from the user terminal and the second inborn ID included in the certificate match each other.

When the primary authentication fails because the first inborn ID and the second inborn ID do not match each other, in operation 706, the authentication execution device may transmit a message indicating that the primary authentication fails to the user terminal.

When the first inborn ID and the second inborn ID match each other and the primary authentication is completed, in operation 707, the authentication execution device may perform secondary authentication of the user by verifying the private key signature information received from the user terminal with the public key included in the certificate. The private key signature information may be verified by determining whether the private key signature information is normally decrypted with the public key.

When the secondary authentication fails because the private key signature information is not verified with the public key, in operation 708, the authentication execution device may transmit a message indicating that the secondary authentication fails to the user terminal.

When the private key signature information is verified with the public key and the secondary authentication is completed, in operation 709, the authentication execution device may perform an operation in response to the user's request. For example, the authentication execution device may approve a requested payment, open a door, or grant access to a secure area. However, the operation in response to the user's request is not limited to the above examples.

In operation 710, the authentication execution device may transmit results obtained by performing the operation in response to the user's request to the user terminal.

Since the above details described with reference to FIGS. 1 to 6 are directly applied to each operation illustrated in FIG. 7, detailed descriptions thereof will be omitted.

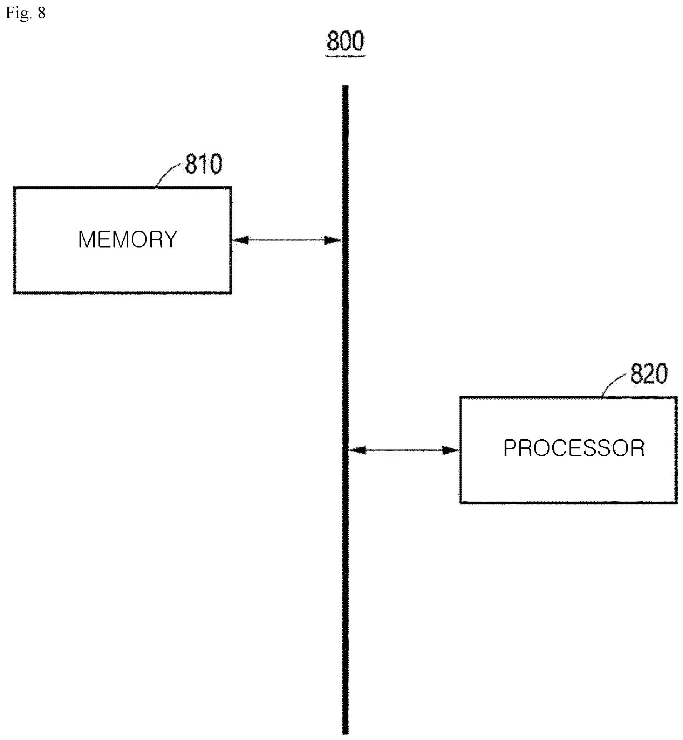

FIG. 8 is a block diagram for describing an electronic device according to an embodiment.

Referring to FIG. 8, an electronic device 800 may include a memory 810 and a processor 820. The memory 810 and the processor 820 may communicate with each other through a bus, peripheral component interconnect express (PCIe), a network on a chip (NoC), or the like. The electronic device 800 may be implemented as the user terminal, the authentication execution device, or the authentication system that is described above.

The memory 810 may include computer-readable instructions. The processor 820 may perform the above-described operations as the instructions stored in the memory 810 are executed in the processor 820. The memory 810 may be a volatile memory or non-volatile memory.

The processor 820 is a device that executes instructions or programs or controls an image restoration device 800, and may include, for example, a central processing unit (CPU) and/or a graphics processing unit (GPU). In an embodiment, the processor 820 may receive a first inborn ID, private key signature information, and a certificate issued by an authentication system from a user terminal and decrypt the certificate using a public key of the authentication system to obtain a second inborn ID and a public key of the user terminal included in the certificate, perform primary authentication of the user of the user terminal by checking whether the first inborn ID and the second inborn ID match each other, verify the private key signature information with the public key when the primary authentication is completed, and perform secondary authentication of the user. In another embodiment, the processor 820 may generate a first inborn ID in response to the user's request for the authentication execution device, transmit the first inborn ID, private key signature information of the user terminal, and a certificate issued by the authentication system to the authentication execution device, and receive results of the primary authentication and secondary authentication performed by the authentication execution device on the basis of at least one of the first inborn ID, the private key signature information, and the certificate.

In addition, the electronic device 800 may perform the above-described operations.

The method according to the embodiment may be implemented in the form of program instructions that can be executed through various computer units and recorded on computer readable media. The computer readable media may include program instructions, data files, data structures, or combinations thereof. The program instructions recorded on the computer readable media may be specially designed and prepared for the embodiments of the present invention or may be available instructions well-known to those skilled in the field of computer software. Examples of the computer readable media include magnetic media such as a hard disk, a floppy disk, and a magnetic tape, optical media such as a compact disc read only memory (CD-ROM) and a digital versatile disc (DVD), magneto-optical media such as a floptical disk, and a hardware device, such as a read only memory (ROM), a random-access memory (RAM), or a flash memory, that is specially made to store and perform the program instructions. Examples of the program instruction include machine code generated by a compiler and high-level language code that can be executed in a computer using an interpreter and the like. The hardware device may be configured as at least one software module in order to perform operations of embodiments of the present invention and vice versa.

The software may include computer programs, code, instructions, or a combination of one or more thereof, and may configure a processing device to operate as desired or command processing devices independently or collectively. **In** order to be interpreted by or provide instructions or data to the processing device, the software and/or the data may be permanently or temporarily embodied in any tangible machine, component, physical device, virtual device, computer storage medium or device, or transmitted signal wave. The software may be distributed on computer systems connected via a network and stored or executed in a distributed manner. The software and the data may be stored on one or more computer readable recording media.

As described above, although the embodiments have been described with limited drawings, those skilled in the art may apply various technical modifications and variations on the basis of the above. For example, the described techniques may be performed in an order different from the method described, and/or appropriate results may be obtained even when the elements of the described system, structure, device, circuit, etc. are coupled or combined in a different form from the described method, or replaced or substituted by other elements or equivalents.

Therefore, other implementations, other embodiments, and equivalents of the claims are within the scope of the following claims.

## Claims

1. An operating method of an authentication execution device (520), comprising:
receiving (703) a first inborn ID, private key signature information, and a certificate issued by an authentication system from a user terminal (510);
obtaining a second inborn ID and a public key of the user terminal included in the certificate by decrypting (704) the certificate using a public key of the authentication system (530);
performing primary authentication (705) of a user of the user terminal by checking whether the first inborn ID and the second inborn ID match each other (705); and
when the primary authentication is completed, performing secondary authentication (707) of the user by verifying the private key signature information with the public key included in the certificate,
wherein the first inborn ID is generated based on a first part of an authentication key generated using:
at least some of bioinformation of the user obtained from the user terminal and
at least some of a unique key corresponding to the user terminal,
wherein a private key and the public key of the user terminal are generated based on a second part of the authentication key, wherein the first part and the second part of the authentication key are determined independently of each other.

2. The operating method of claim 1, wherein the certificate is generated by signing the second inborn ID and the public key of the user terminal, which are transmitted (630) from the user terminal to the authentication system in a setup process, with a private key of the authentication system.

3. The operating method of claim 1, wherein the second inborn ID and the public key of the user terminal, which are transmitted (630) from the user terminal to the authentication system in a setup process, along with personal information of the user are registered in the authentication system.

4. The operating method of claim 1, further comprising, when the secondary authentication is completed, performing (710) an operation according to a request received from the user terminal.

5. An operating method of a user terminal, comprising:
generating (702) a first inborn ID in response to a user's request for an authentication execution device (520);
transmitting (703) the first inborn ID, private key signature information of the user terminal, and a certificate issued by an authentication system (530) to the authentication execution device; and
receiving results of primary authentication (705) and secondary authentication (707) that are performed by the authentication execution device, wherein the primary authentication is performed on the basis of the first inborn ID, and wherein the secondary authentication is performed on the basis of the private key signature information and a public key of the user terminal included in the certificate,
wherein the first inborn ID is generated based on a first part of an authentication key generated using:
at least some of bioinformation of the user obtained from the user terminal and
at least some of a unique key corresponding to the user terminal,
wherein a private key and the public key of the user terminal are generated based on a second part of the authentication key, wherein the first part and the second part of the authentication key are determined independently of each other.

6. The operating method of claim 5, wherein the certificate is generated by signing a second inborn ID and the public key of the user terminal, which are transmitted from the user terminal to the authentication system in a setup process, with a private key of the authentication system.

7. The operating method of claim 5, wherein a second inborn ID and the public key of the user terminal, which are transmitted from the user terminal to the authentication system in a setup process, along with personal information of the user are registered in the authentication system.

8. The operating method of claim 5, wherein, in the receiving of the results of the primary authentication and the secondary authentication, a result of an operation that is performed (710) according to the request is received in response to completion of the primary authentication and the secondary authentication.

9. An authentication execution device (520), comprising:
a processor; and
a memory including at least one instruction executable by the processor,
wherein, when the at least one instruction is executed by the processor, the processor is configured to receive (703) a first inborn ID, private key signature information, and a certificate issued by an authentication system from a user terminal (510),
obtain a second inborn ID and a public key of the user terminal included in the certificate by decrypting (704) the certificate using a public key of the authentication system (530),
perform primary authentication(705) of a user of the user terminal by checking whether the first inborn ID and the second inborn ID match each other, and
when the primary authentication is completed, perform secondary authentication (707) of the user by verifying the private key signature information with the public key included in the certificate,
wherein the first inborn ID is generated (702) based on a first part of an authentication key
generated using at least some of bioinformation of the user obtained from the user terminal and
at least some of a unique key corresponding to the user terminal,
wherein a private key and a public key of the user terminal are generated based on a second part of the authentication key, wherein the first part and the second part of the authentication key are determined independently of each other.

10. A user terminal (510), comprising:
a processor; and
a memory including at least one instruction executable by the processor,
wherein, when the at least one instruction is executed by the processor, the processor is configured to generate (702) a first inborn ID in response to a user's request (701) for an authentication execution device,
transmit (703) the first inborn ID, private key signature information of the user terminal, and a certificate issued by an authentication system to the authentication execution device, and
receive results of primary authentication (705) and secondary authentication (707) that are performed by the authentication execution device, wherein the primary authentication is performed on the basis of the first inborn ID, and wherein the secondary authentication is performed on the basis of the private key signature information and a public key of the user terminal included in the certificate, and
wherein the first inborn ID is generated (702) based on a first part of an authentication key generated using at least some of bioinformation of the user obtained from the user terminal and at least some of a unique key corresponding to the user terminal,
wherein a private key and the public key of the user terminal are generated based on a second part of the authentication key, wherein the first part and the second part of the authentication key are determined independently of each other.

## Patentansprüche

1. Betriebsverfahren einer Authentifizierungsausführungsvorrichtung (520), umfassend:
Empfangen (703) einer ersten Inborn-ID, von Signaturinformationen eines privaten Schlüssels und eines Zertifikats, das von einem Authentifizierungssystem ausgestellt wird, von einem Benutzerendgerät (510),
Erhalten einer zweiten Inborn-ID und eines öffentlichen Schlüssels des Benutzerendgeräts, der in dem Zertifikat beinhaltet ist, durch Entschlüsseln (704) des Zertifikats unter Verwendung eines öffentlichen Schlüssels des Authentifizierungssystems (530);
Durchführen einer primären Authentifizierung (705) eines Benutzers des Benutzerendgeräts durch Überprüfen, ob die erste Inborn-ID und die zweite Inborn-ID miteinander übereinstimmen (705); und
wenn die primäre Authentifizierung abgeschlossen ist, Durchführen einer sekundären Authentifizierung des Benutzers durch Verifizieren der Signaturinformationen eines privaten Schlüssels mit dem in dem Zertifikat beinhalteten öffentlichen Schlüssel,
wobei die erste Inborn-ID basierend auf einem ersten Teil eines Authentifizierungsschlüssels generiert wird, der unter Verwendung von Folgendem generiert wird:
mindestens einigen Bioinformationen des Benutzers, die von dem Benutzerendgerät erhalten werden, und
mindestens einem Teil von einem eindeutigen Schlüssel, der dem Benutzerendgerät entspricht,
wobei ein privater Schlüssel und der öffentliche Schlüssel des Benutzerendgeräts basierend auf einem zweiten Teil des Authentifizierungsschlüssels generiert werden, wobei der erste Teil und der zweite Teil des Authentifizierungsschlüssels unabhängig voneinander bestimmt werden.

2. Betriebsverfahren nach Anspruch 1, wobei das Zertifikat durch Signieren der zweiten Inborn-ID und des öffentlichen Schlüssels des Benutzerendgeräts, die in einem Einrichtungsprozess von dem Benutzerendgerät an das Authentifizierungssystem übertragen (630) werden, mit einem privaten Schlüssel des Authentifizierungssystems generiert wird.

3. Betriebsverfahren nach Anspruch 1, wobei die zweite Inborn-ID und der öffentliche Schlüssel des Benutzerendgeräts, die in einem Einrichtungsprozess von dem Benutzerendgerät an das Authentifizierungssystem übertragen (630) werden, zusammen mit persönlichen Informationen des Benutzers in dem Authentifizierungssystem registriert werden.

4. Betriebsverfahren nach Anspruch 1, ferner umfassend, wenn die sekundäre Authentifizierung abgeschlossen ist, Durchführen (710) eines Vorgangs gemäß einer Anforderung, die von dem Benutzerendgerät empfangen wurde.

5. Betriebsverfahren eines Benutzerendgeräts, umfassend:
Generieren (702) einer ersten Inborn-ID als Reaktion auf eine Anforderung des Benutzers für eine Authentifizierungsausführungsvorrichtung (520);
Übertragen (703) der ersten Inborn-ID, von Signaturinformationen eines privaten Schlüssels des Benutzerendgeräts und eines Zertifikats, das von einem Authentifizierungssystem (530) ausgestellt wird, an die Authentifizierungsausführungsvorrichtung; und
Empfangen von Ergebnissen der primären Authentifizierung (705) und der sekundären Authentifizierung (707), die von der Authentifizierungsausführungsvorrichtung durchgeführt werden, wobei die primäre Authentifizierung basierend auf den Signaturinformationen eines privaten Schlüssels und einem öffentlichen Schlüssel des Benutzerendgeräts, der in dem Zertifikat beinhaltet ist, durchgeführt wird,
wobei die erste Inborn-ID basierend auf einem ersten Teil eines Authentifizierungsschlüssels generiert wird, der unter Verwendung von Folgendem generiert wird:
mindestens einigen Bioinformationen des Benutzers, die von dem Benutzerendgerät erhalten werden, und
mindestens einem Teil von einem eindeutigen Schlüssel, der dem Benutzerendgerät entspricht, wobei ein privater Schlüssel und der öffentliche Schlüssel des Benutzerendgeräts basierend auf einem zweiten Teil des Authentifizierungsschlüssels generiert werden, wobei der erste Teil und der zweite Teil des Authentifizierungsschlüssels unabhängig voneinander bestimmt werden.

6. Betriebsverfahren nach Anspruch 5, wobei das Zertifikat durch Signieren einer zweiten Inborn-ID und des öffentlichen Schlüssels des Benutzerendgeräts, die in einem Einrichtungsprozess von dem Benutzerendgerät an das Authentifizierungssystem übertragen werden, mit einem privaten Schlüssel des Authentifizierungssystems generiert wird.

7. Betriebsverfahren nach Anspruch 5, wobei eine zweite Inborn-ID und der öffentliche Schlüssel des Benutzerendgeräts, die in einem Einrichtungsprozess von dem Benutzerendgerät an das Authentifizierungssystem übertragen werden, zusammen mit persönlichen Informationen des Benutzers in dem Authentifizierungssystem registriert werden.

8. Betriebsverfahren nach Anspruch 5, wobei bei dem Empfangen der Ergebnisse der primären Authentifizierung und der sekundären Authentifizierung ein Ergebnis eines Vorgangs, der gemäß der Anforderung durchgeführt (710) wird, als Reaktion auf den Abschluss der primären Authentifizierung und der sekundären Authentifizierung empfangen wird.

9. Authentifizierungsausführungsvorrichtung (520), umfassend:
einen Prozessor; und
einen Speicher, der mindestens eine Anweisung beinhaltet, die von dem Prozessor ausführbar ist,
wobei, wenn die mindestens eine Anweisung durch den Prozessor ausgeführt wird, der Prozessor dazu konfiguriert ist, eine erste Inborn-ID, Signaturinformationen eines privaten Schlüssels und ein Zertifikat, das von einem Authentifizierungssystem ausgestellt wird, von einem Benutzerendgerät (510) zu empfangen (703),
eine zweite Inborn-ID und einen öffentlichen Schlüssel des Benutzerendgeräts, der in dem Zertifikat beinhaltet ist, durch Entschlüsseln (704) des Zertifikats unter Verwendung eines öffentlichen Schlüssels des Authentifizierungssystems (530) zu erhalten,
eine primäre Authentifizierung (705) eines Benutzers des Benutzerendgeräts durch Überprüfen, ob die erste Inborn-ID und die zweite Inborn-ID miteinander übereinstimmen, durchzuführen und,
wenn die primäre Authentifizierung abgeschlossen ist, eine sekundäre Authentifizierung (707) des Benutzers durch Verifizieren der Signaturinformationen eines privaten Schlüssels mit dem in dem Zertifikat beinhalteten öffentlichen Schlüssel durchzuführen,
wobei die erste Inborn-ID basierend auf einem ersten Teil eines Authentifizierungsschlüssels generiert (702) wird, der unter Verwendung von mindestens einigen Bioinformationen des Benutzers, die von dem Benutzerendgerät erhalten werden, und
mindestens einem Teil von einem eindeutigen Schlüssel, der dem Benutzerendgerät entspricht,
generiert wird, wobei ein privater Schlüssel und ein öffentlicher Schlüssel des Benutzerendgeräts basierend auf einem zweiten Teil des Authentifizierungsschlüssels generiert werden, wobei der erste Teil und der zweite Teil des Authentifizierungsschlüssels unabhängig voneinander bestimmt werden.

10. Benutzerendgerät (510), umfassend:
einen Prozessor; und
einen Speicher, der mindestens eine Anweisung beinhaltet, die von dem Prozessor ausführbar ist,
wobei, wenn die mindestens eine Anweisung durch den Prozessor ausgeführt wird, der Prozessor dazu konfiguriert ist, eine erste Inborn-ID als Reaktion auf die Anforderung (701) eines Benutzers für eine Authentifizierungsausführungsvorrichtung zu generieren (702),
die erste Inborn-ID, Signaturinformationen eines privaten Schlüssels des Benutzerendgeräts und ein Zertifikat, das von einem Authentifizierungssystem ausgestellt wird, an die Authentifizierungsausführungsvorrichtung zu übertragen (703) und
Ergebnisse der primären Authentifizierung (705) und der sekundären Authentifizierung (707), die von der Authentifizierungsausführungsvorrichtung durchgeführt werden, zu empfangen, wobei die primäre Authentifizierung basierend auf der ersten Inborn-ID durchgeführt wird und wobei die sekundäre Authentifizierung basierend auf den Signaturinformationen eines privaten Schlüssels und einem öffentlichen Schlüssel des Benutzerendgeräts, der in dem Zertifikat beinhaltet ist, durchgeführt wird und
wobei die erste Inborn-ID basierend auf einem ersten Teil eines Authentifizierungsschlüssels generiert (702) wird, der unter Verwendung von mindestens einigen Bioinformationen des Benutzers, die von dem Benutzerendgerät erhalten werden, und mindestens einem Teil von einem eindeutigen Schlüssel, der dem Benutzerendgerät entspricht, generiert wird,
wobei ein privater Schlüssel und der öffentliche Schlüssel des Benutzerendgeräts basierend auf einem zweiten Teil des Authentifizierungsschlüssels generiert werden, wobei der erste Teil und der zweite Teil des Authentifizierungsschlüssels unabhängig voneinander bestimmt werden.

## Revendications

1. Procédé de fonctionnement d'un dispositif d'exécution d'authentification (520), comprenant :
la réception (703) d'un premier identifiant inné, d'informations de signature de clé privée et d'un certificat émis par un système d'authentification à partir d'un terminal d'utilisateur (510) ;
l'obtention d'un deuxième identifiant inné et une clé publique du terminal utilisateur inclus dans le certificat en décryptant (704) le certificat à l'aide d'une clé publique du système d'authentification (530) ;
la réalisation d'une authentification primaire (705) d'un utilisateur du terminal utilisateur en vérifiant si le premier identifiant inné et le deuxième identifiant inné correspondent (705) ; et
lorsque l'authentification primaire est terminée, la réalisation d' une authentification secondaire (707) de l'utilisateur en vérifiant les informations de signature de la clé privée avec la clé publique incluse dans le certificat,
dans lequel le premier identifiant inné est généré sur la base d'une première partie d'une clé d'authentification générée à l'aide :
d'au moins une partie des bioinformations de l'utilisateur obtenues à partir du terminal de l'utilisateur et
d'au moins une partie d'une clé unique correspondant au terminal utilisateur,
dans lequel une clé privée et la clé publique du terminal utilisateur sont générées sur la base d'une deuxième partie de la clé d'authentification, dans lequel la première partie et la deuxième partie de la clé d'authentification sont déterminées indépendamment l'une de l'autre.

2. Procédé de fonctionnement selon la revendication 1, dans lequel le certificat est généré en signant le deuxième identifiant inné et la clé publique du terminal d'utilisateur, qui sont transmis du terminal utilisateur au système d'authentification dans un processus de configuration, avec une clé privée du système d'authentification.

3. Procédé de fonctionnement selon la revendication 1, dans lequel le deuxième identifiant inné et la clé publique du terminal utilisateur, qui sont transmis (630) du terminal utilisateur au système d'authentification dans un processus de configuration, ainsi que les informations personnelles de l'utilisateur sont enregistrés dans le système d'authentification.

4. Procédé de fonctionnement selon la revendication 1, comprenant en outre, lorsque l'authentification secondaire est terminée, l'exécution (710) d'une opération conformément à une demande reçue du terminal utilisateur.

5. Procédé de fonctionnement d'un terminal utilisateur, comprenant :
la génération (702) d'un premier identifiant inné en réponse à une demande de l'utilisateur pour un dispositif d'exécution d'authentification (520) ;
la transmition (703) du premier identifiant inné, des informations de signature de clé privée du terminal utilisateur et un certificat émis par un système d'authentification (530) au dispositif d'exécution de l'authentification ; et
la réception des résultats d'une authentification primaire (705) et d'une l'authentification secondaire (707) effectuées par le dispositif d'exécution d'authentification, dans lequel l'authentification primaire est effectuée sur la base du premier identifiant inné, et dans lequel l'authentification secondaire est effectuée sur la base des informations de signature de la clé privée et d'une clé publique du terminal utilisateur incluse dans le certificat,
dans lequel le premier identifiant inné est généré sur la base d'une première partie d'une clé d'authentification générée à l'aide :
d'au moins une partie des bioinformations de l'utilisateur obtenues à partir du terminal utilisateur et
d'au moins une partie d'une clé unique correspondant au terminal utilisateur,
dans lequel une clé privée et la clé publique du terminal utilisateur sont générées sur la base d'une deuxième partie de la clé d'authentification, dans lequel la première partie et la deuxième partie de la clé d'authentification sont déterminées indépendamment l'une de l'autre.

6. Procédé de fonctionnement selon la revendication 5, dans lequel le certificat est généré par en signant un second identifiant inné et la clé publique du terminal utilisateur, qui sont transmis du terminal utilisateur au système d'authentification au cours d'un processus de configuration, avec une clé privée du système d'authentification.

7. Procédé de fonctionnement selon la revendication 5, dans lequel un deuxième identifiant inné et la clé publique du terminal utilisateur, qui sont transmis du terminal utilisateur au système d'authentification dans un processus de configuration, ainsi que des informations personnelles de l'utilisateur sont enregistrées dans le système d'authentification.

8. Procédé de fonctionnement selon la revendication 5, dans lequel, lors de la réception des résultats de l'authentification primaire et de l'authentification secondaire, un résultat d'une opération effectuée (710) conformément à la demande est reçu en réponse à l'achèvement de l'authentification primaire et de l'authentification secondaire.

9. Dispositif d'exécution d'authentification (520), comprenant :
un processeur ; et
une mémoire comprenant au moins une instruction exécutable par le processeur,
dans lequel, lorsque l'au moins une instruction est exécutée par le processeur, le processeur est configuré pour recevoir (703) un premier identifiant inné, des informations de signature de clé privée et un certificat émis par un système d'authentification à partir d'un terminal utilisateur (510),
obtenir un deuxième identifiant inné et une clé publique du terminal utilisateur inclus dans le certificat en décryptant (704) le certificat à l'aide d'une clé publique du système d'authentification (530),
effectuer une authentification primaire (705) d'un utilisateur du terminal d'utilisateur en vérifiant si le premier identifiant inné et le second identifiant inné correspondent l'un à l'autre, et
lorsque l'authentification primaire est terminée, procéder à une authentification secondaire (707) de l'utilisateur en vérifiant les informations de signature de clé privée avec la clé publique incluse dans le certificat,
dans lequel le premier identifiant inné est généré (702) sur la base d'une première partie d'une clé d'authentification générée à l'aide d'au moins une partie des bioinformations de l'utilisateur obtenues à partir du terminal utilisateur et
d'au moins une partie d'une clé unique correspondant au terminal utilisateur,
dans lequel une clé privée et une clé publique du terminal utilisateur sont générées sur la base d'une deuxième partie de la clé d'authentification, dans lequel la première partie et la deuxième partie de la clé d'authentification sont déterminées indépendamment l'une de l'autre.

10. Terminal utilisateur (510), comprenant
un processeur ; et
une mémoire comprenant au moins une instruction exécutable par le processeur,
dans lequel, lorsque la au moins une instruction est exécutée par le processeur, le processeur est configuré pour générer (702) un premier identifiant inné en réponse à une demande d'utilisateur (701) pour un dispositif d'exécution d'authentification,
transmettre (703) le premier identifiant inné, les informations de signature de clé privée du terminal utilisateur et un certificat délivré par un système d'authentification au dispositif d'exécution d'authentification, et
recevoir des résultats d'une authentification primaire (705) et d'une authentification secondaire (707) effectuées par le dispositif d'exécution d'authentification, dans lequel l'authentification primaire est effectuée sur la base du premier identifiant inné, et dans lequel l'authentification secondaire est effectuée sur la base des informations de signature de clé privée et d'une clé publique du terminal utilisateur incluse dans le certificat, et
dans lequel le premier identifiant inné est généré (702) sur la base d'une première partie d'une clé d'authentification générée en utilisant au moins une partie des bioinformations de l'utilisateur obtenues à partir du terminal utilisateur et au moins une partie d'une clé unique correspondant au terminal utilisateur,
dans lequel une clé privée et la clé publique du terminal utilisateur sont générées sur la base d'une deuxième partie de la clé d'authentification, dans lequel la première partie et la deuxième partie de la clé d'authentification sont déterminées indépendamment l'une de l'autre.
